Europäisches Patentamt

**European Patent Office**

**Office européen des brevets**

(11) Numéro de publication: **0 158 621**
**A2**

(12) **DEMANDE DE BREVET EUROPEEN**

(21) Numéro de dépôt: **85870043.8**

(22) Date de dépôt: **20.03.85**

(51) Int. Cl.⁴: **B 23 K 26/00**

(30) Priorité: **22.03.84 LU 85266**

(43) Date de publication de la demande:
**16.10.85 Bulletin 85/42**

(84) Etats contractants désignés:
**AT DE FR GB IT NL SE**

(71) Demandeur: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles(BE)**

(72) Inventeur: **Crahay, Jean René Ster, 334 B-4878 Fracorchamps(BE)**

(74) Mandataire: **Lacasse, Lucien Emile et al, CENTRE DE RECHERCHES METALLURGIQUES Abbaye du Val-Benoît 11, rue Ernest Solvay B-4000 Liège(BE)**

(54) **Perfectionnements aux procédés pour améliorer l'état de surface d'un cylindre.**

(57) Pour créer une rugosité contrôlée à la surface du cylindre, au moyen d'un faisceau corpusculaire, on met le cylindre en rotation autour de son axe, on dispose un émetteur de faisceau corpusculaire de telle façon qu'il émette un faisceau suivant une direction sensiblement perpendiculaire à l'axe du cylindre, on focalise le dit faisceau sur la surface du cylindre et on déplace le dit émetteur parallèlement à l'axe du cylindre. La vitesse de rotation du cylindre est de préférence synchronisée avec la vitesse de déplacement du dit émetteur.

EP 0 158 621 A2

- 1 -

## Perfectionnements aux procédés pour améliorer l'état de surface d'un cylindre.

La présente invention concerne des perfectionnements aux procédés pour améliorer l'état de surface d'un cylindre, à l'aide d'un faisceau corpusculaire focalisé, tel qu'un faisceau laser. Ce procédé s'applique en particulier aux cylindres de laminoir ou aux cylindres utilisés dans les installations de recuit continu de bandes d'acier.

Dans ce domaine, on connaît déjà plusieurs procédés et dispositifs, proposés notamment par le présent demandeur, permettant de créer une rugosité contrôlée à la surface des cylindres. A cet égard, on peut en particulier se référer au brevet belge N° 880.996.

Les procédés connus présentent un inconvénient important lié au fait que les dispositifs d'émission actuels sont fixes, notamment en raison de leur poids et de leur volume. Ils sont en général disposés de façon à émettre un faisceau selon une direction parallèle à l'axe longitudinal du cylindre; ce faisceau est renvoyé vers la surface de ce cylindre par une tête

0158621

de marquage qui contient au moins un miroir de renvoi et un système de focalisation du faisceau sur la surface du cylindre. Cette tête se déplace parallèlement à l'axe du cylindre, de sorte que la distance entre la tête de marquage et le dispositif émetteur varie en cours d'opération. Il en résulte notamment qu'un défaut de parallélisme du faisceau émis peut entraîner un déplacement du plan de focalisation du faisceau réfléchi et par conséquent une hétérogénéité dans la rugosité imprimée à la surface du cylindre.

Il est cependant apparu récemment des émetteurs plus légers, en particulier des émetteurs laser, de puissance suffisante, qui permettent, notamment grâce au procédé qui fait l'objet de la présente invention, de remédier aux inconvénients précités.

A cet effet, le procédé de l'invention est essentiellement caractérisé en ce que l'on dispose un émetteur de faisceau corpusculaire de telle façon qu'il émette un faisceau suivant une direction sensiblement perpendiculaire à l'axe du cylindre, en ce que l'on focalise le dit faisceau sur la surface du cylindre et en ce que l'on déplace le dit émetteur parallèlement à l'axe du cylindre.

Selon une variante intéressante, le cylindre est mis en rotation avec une vitesse qui est de préférence synchronisée avec la vitesse de déplacement de l'émetteur.

L'utilisation d'un émetteur mobile conformément à l'invention, offre divers avantages par rapport aux méthodes connues basées sur l'emploi d'un émetteur fixe.

En premier lieu, l'émetteur peut être disposé à une faible distance de la surface à traiter; par conséquent, un éventuel manque de parallélisme du faisceau n'aura pratiquement aucune influence sur la position du plan de focalisation du faisceau et par conséquent sur l'homogénéité de la rugosité créée à la surface du cylindre.

Il faut d'ailleurs souligner que le procédé de l'invention permettrait de supprimer aisément une influence éventuelle d'un tel défaut de parallélisme du faisceau. En effet, l'émetteur se déplace parallèlement à l'axe du cylindre et la longueur du faisceau depuis l'émetteur jusqu'à la surface du cylindre est donc constante. Dans ces conditions, la mise au point initiale de la focalisation ne nécessite normalement aucun réglage ultérieur.

Enfin, le procédé de l'invention permet de simplifier le système optique nécessaire, en supprimant notamment les dispositifs de réflexion du faisceau.

Bien entendu, il ne sortirait pas du cadre de l'invention de combiner l'utilisation d'un émetteur mobile avec d'autres opérations connues en soi, telles que la modulation ou l'interruption intermittente, ou hachage, du faisceau.

- 4 -                           0158621

Revendications.

1. Procédé pour améliorer l'état de surface d'un cylindre, dans lequel on crée une rugosité contrôlée à la surface du cylindre, au moyen d'un faisceau corpusculaire, caractérisé en ce que l'on dispose un émetteur de faisceau corpusculaire de telle façon qu'il émette un faisceau suivant une direction sensiblement perpendiculaire à l'axe du cylindre, en ce que l'on focalise le dit faisceau sur la surface du cylindre et en ce que l'on déplace le dit émetteur parallèlement à l'axe du cylindre.

2. Procédé suivant la revendication 1, caractérisé en ce que l'on met le dit cylindre en rotation autour de son axe longitudinal, avec une vitesse qui est de préférence synchronisée avec la vitesse de déplacement du dit émetteur.